# EUROPÄISCHE PATENTSCHRIFT

(11) **EP 0 875 971 B1**
(45) Veröffentlichungstag und Bekanntmachung des Hinweises auf die Patenterteilung: **03.11.2004**
(21) Anmeldenummer: 98103962.1
(22) Anmeldetag: 06.03.1998
(51) Int. Cl.: H02B 13/035

(54) **Hochspannungsschaltanlage**
High voltage switchgear
Installation de distribution électrique pour haute tension

(30) Priorität: 02.05.1997 DE 19718639
(43) Veröffentlichungstag der Anmeldung: 04.11.1998
(73) Patentinhaber: ABB PATENT GmbH, 68526 Ladenburg (DE)
(72) Erfinder: König, Werner, 68542 Heddesheim (DE); Neumaier, Heinrich, Dipl.-Ing., 77756 Hausach (DE); Schumacher, Martin, Dr.-Ing., 63517 Rodenbach (DE)
(74) Vertreter: Miller, Toivo

(56) Entgegenhaltungen:
- EP-B1- 0 463 490
- EP-B1- 0 564 899
- DE-A1- 3 214 799

## Beschreibung

Die Erfindung betrifft eine Hochspannungsschaltanlage gemäß dem Oberbegriff des Anspruches 1. (Siehe EP-B1-0463490).

Eine bekannte Hochspannungsschaltanlage besitzt ein Gehäuse, in dem wenigstens ein Leistungsschalterpol senkrecht angeordnet ist. Das Gehäuse besitzt zwei diametral sich gegenüberliegende Mantellinien, auf deren einen Seite zwei Flanschstutzen angebracht sind, die zur Verbindung mit Sammelschienen dienen; am anderen Ende ist ein Flanschstutzen vorgesehen, der zum Anschluß eines Gehäuses mit Erdungsschalter, Trennschalter, Spannungswandler und Kabelendverschluß dient. (Siehe EP-B1-0564899).

Bei der bekannten Anordnung ist den beiden übereinander angeordneten Flanschstutzen je eine Leitung zugeordnet, die beide mit dem unteren Ende des Leistungsschalters verbunden sind; das obere Ende des Leistungsschalters ist dann mit dem Gehäuse mit dem Kabelendverschluß etc. verbunden.

Zur Erweiterung dieser Anordnung besteht lediglich die Möglichkeit, unterhalb des Flanschstutzens, an dem das Gehäuse mit Erdungsschalter, Trennschalter und Kabelendverschluß anschließbar ist, einen weiteren Flanschstutzen vorzusehen.

Aufgabe der Erfindung ist es, eine Schaltanlage der eingangs genannten Art zu schaffen, bei der eine vergrößerte Anzahl von Varianten möglich ist.

Diese Aufgabe wird erfindungsgemäß durch die kennzeichnenden Merkmale des Anspruches 1 gelöst.

Erfindungsgemäß also befinden sich auf einer Seite des Gehäuses, d. h. im Bereich einer Mantellinie, zwei Flanschstutzen, durch die Leiter ins Gehäuse eingeführt werden, die mit dem auspuffseitigen Ende des Leistungsschalters verbunden sind. Dieses auspuffseitige Ende ist mit einem Rohr versehen, an dem die beiden Leiter der beiden übereinanderliegenden Flanschstutzen angeschlossen werden können, wobei diese Leiter im wesentlichen eine radiale Erstreckung haben, unberücksichtigt die Tatsache, daß für eine dreiphasige Anordnung, bei der die Leiterstücke an den Ecken eines Dreieckes angeordnet sind, L- oder Z-förmige Übergangsstücke vorgesehen sein müssen.

Der Flanschstutzen, der zum Trennschalter-Erder-Kabelendverschlußgehäuse führt, befindet sich oberhalb der beiden Flanschstutzen auf der gegenüberliegenden Mantellinie. Der Abstand der beiden Flanschstutzen auf der einen Seite bzw. auf der einen Mantellinie entspricht dem Abstand des oberen Flanschstutzen zu dem Flanschstutzen zum Trennschalter-Erder-Kabelendverschlußgehäuse.

Aufgrund der konstruktiven Ausgestaltung des Gehäuses kann auf der dem Flanschstutzen zum Trennschalter-Erder-Kabelendverschlußgehäuse gegenüberliegenden Seite ein weiterer Flanschstutzen angeformt sein; es besteht auch die Möglichkeit, unterhalb des Flanschstutzens zum Trennschalter-Erder-Kabelendverschlußgehäuse zwei weitere Flanschstutzen anzuformen, die mit den beiden diametral gegenüberliegenden Flanschstutzen fluchten.

An allen Flanschstutzen können alle Arten von Stromanschlüssen angeschlossen werden, z. B. Sammelschienen, Kabelendverschlüsse, Spannungs- und Stromwandler oder Trennschalter- und Erdungsschaltergehäuse.

Anhand der Zeichnung, in der ein Ausführungsbeispiel der Erfindung dargestellt ist, sollen die Erfindung sowie weitere vorteilhafte Ausgestaltungen und Verbesserungen der Erfindung näher erläutert und beschrieben werden.

Es zeigt die einzige Fig. eine Schnittansicht einer Hochspannungsschaltanlage.

Die Hochspannungsschaltanlage 10 besitzt ein zylinderförmiges, senkrecht stehendes, rohrförmiges Metallgehäuse 11, das als Metallkapselung dient und am oberen bzw. unteren Ende mit einer Abschlußwand 12, 13 abgeschlossen ist. Innerhalb des Gehäuses 11 befindet sich ein Leistungsschalter 14, der je nach der Anzahl der Phasen durch einen oder drei Pole gebildet ist. Dieser Leistungsschalter 14 bzw. jeder einzelne Pol besitzt ein oberes Teil 15 und ein unteres Teil 16, welches als Auspuffteil dient und über ein Isolierrohr 17 mit dem oberen Teil 15 verbunden ist, so daß die beiden Teile 15 und 16 bei geöffneter Schaltstrecke 18 elektrisch gegeneinander isoliert sind.

Am oberen Teil schließt ein Abgangsleiter 19 an, der durch einen ersten Flanschstutzen 20, ggf. umgeben von einem Stromwandler 21 in ein Abgangsgehäuse 22 (kurz Gehäuse 22 genannt) hineingeführt ist, welches einen Trennschalter 23, einen Schnellerder 24, einen Kabelabgang 25 und einen Spannungswandler 26 aufweist. Der Trennschalter 23 kann auch eine Erdungsfunktion besitzen. Zwischen dem freien Ende des Flanschstutzens 20 und dem Gehäuse 22 kann ein Schott- oder Tragisolator 27 vorgesehen sein. Auf der Mantellinie 28, auf der der Flanschstutzen 20 liegt, können, was strichliert angedeutet ist, zwei weitere Flanschstutzen 29 und 30 vorgesehen sein; sie können auch weggelassen sein oder es kann lediglich der Flanschstutzen 29 oder Flanschstutzen 30 vorhanden sein. Über diese Flanschstutzen 29, 30 wird der Leistungsschalter in weiter unten dargestellter Weise mit evtl. anzuordnenden Sammelschienen oder anderen Anschlüssen verbunden. Es ist auch möglich, das Gehäuse 22 statt am Flansch 20 auch an den Flanschen 29 oder 30 zu montieren.

Auf der diametral gegenüberliegenden Mantellinie 31 des Gehäuses 11 sind zwei Flanschstutzen 32 und 33 vorgesehen, an denen Sammelschienen 34 und 35 angeformt sind. Die Zuführungsleiter von den Sammelschienen 34 und 35, die die Bezugsziffer 36 und 37 besitzen, sind zu dem unteren Teil 16 des Leistungsschalters 14 geführt; innerhalb des Flanschstutzens 32 bzw. 33 kann ein Trennschalter ggf. mit Erdungsfunktion vorgesehen sein, so daß wahlweise die Sammelschiene 34 oder die Sammelschiene 35 an das untere Teil 16 des Leistungsschalters 16 angeschlossen werden kann.

Oberhalb der beiden Flanschstutzen 32 und 33 kann ein weiterer Flanschstutzen 38 vorgesehen sein, an dem eine dritte Sammelschiene anschließbar ist; in einer besonderen Ausgestaltung kann der Flanschstutzen 38 wegfallen; dafür ist vor dem Metallgehäuse 11 in dem Bereich oberhalb der beiden Sammelschienen 34 und 35 ein Steuerschrank 39 anzuordnen.

Oberhalb der oberen Abschlußwand 12 befindet sich ein Gehäuse 40 mit einem Antrieb 41, der über eine Kurbelwelle 42 ein bewegliches Kontaktstück mit einer Antriebsstange 43 betätigt.

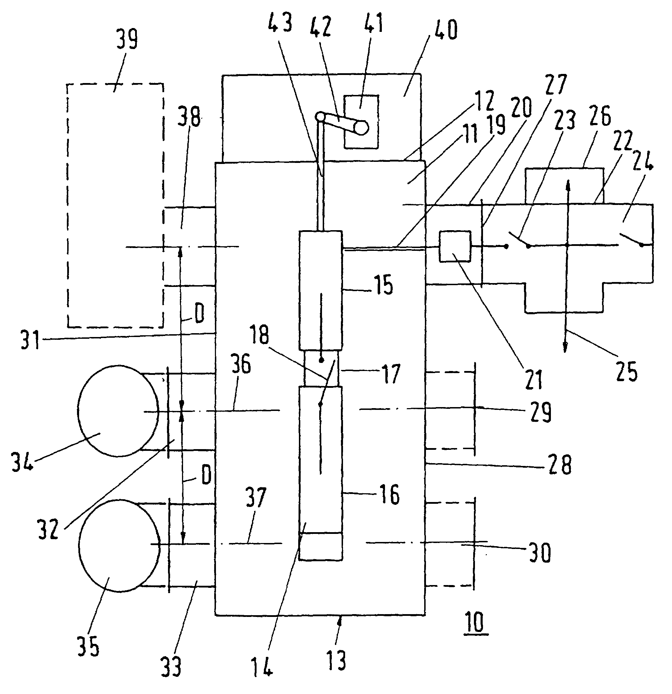

Die Leiterstücke 36 und 37 sind als gerade Linien angedeutet; wenn die Sammelschiene 34 oder 35 oder beide jeweils dreipolig ausgebildet sind, dann befinden sich die drei Pole an den Ecken eines Dreieckes und demgemäß müssen die Leiterstücke 36 zu den einzelnen Polen des Leistungsschalters 14 durch geeignete Z- oder L-förmige Übergangsstücke gebildet sein; derartige Z- oder L-förmige Übergangsstücke sind an sich bekannt, so daß hier nicht näher darauf eingegangen werden muß. In gleicher Weise ist auch das Leiterteilstück 19 als Z- oder L-förmiges Übergangsstück zu denken, wenn es sich bei der Hochspannungsschaltanlage gemäß der Fig. 1 um eine dreipolige Schaltanlage handelt. Die Leiterteilstücke, die durch die Flanschstutzen 29 und 30 zum unteren Teil des Leistungsschalters geführt sind, sind dann in gleicher Weise ausgebildet wie die Leiterteilstücke 36 und 37 bzw. 19.

Der Abstand D zwischen den Mittelachsen der Flanschstutzen 32, 33 bzw. 32, 38 bzw. 20, 29 bzw. 29, 30 ist gleich.

Mit der erfindungsgemäßen Anordnung können Schaltanlagen einer großen Vielfalt mit einfachen Mitteln hergestellt werden; es bedarf dann jeweils eines Ausschnittes und des Ansetzens eines geeigneten Flanschstutzens an der entsprechenden, gewünschten Stelle und das Anschließen der in diesem Flanschstutzen geführten Leiter an die eine oder andere Seite der Schaltstrecke des Leistungsschalters 14.

## Patentansprüche

1. Hochspannungsschaltanlage, mit einem wenigstens einpoligen Schalter (14) sowie mit einem metallischen Kapselungsgehäuse (11), das den Schalter umgibt und mit einem Isoliergas gefüllt ist und dessen Mittelachse parallel zur Schalterachse verläuft, **dadurch gekennzeichnet, daß** an zwei sich diametral gegenüberliegenden Mantellinien (31, 28) des Kapselungsgehäuses (11) je drei übereinander angeordnete, dem Anschluß von Sammelschienen oder jedem anderen Stromanschluß dienende Flanschstutzen (38, 20; 32, 29; 33, 30) angeformt sind, deren Achsen jeweils paarweise miteinander fluchten, wobei im Bereich der unten befindlichen Auspuffseite jedes Schalterpols vier Flanschstutzen (32, 29; 33, 30) und im Bereich des oberen Endes jedes Schalterpols zwei Flanschstutzen (38, 20) vorgesehen sind.

2. Hochspannungsschaltanlage nach Anspruch 1, **dadurch gekennzeichnet, daß** der Abstand (D) zwischen den Mittelachsen der Flanschstutzen (38, 20; 32, 29; 33, 30) jeweils gleich ist.

## Claims

1. High-voltage switchgear assembly, having an at least single-pole switch (14) and having a metallic encapsulation enclosure (11) which surrounds the switch and is filled with an insulating gas, and whose centre axis runs parallel to the switch axis, **characterized in that** three flange stubs (38, 20; 32, 29; 33, 30) which are arranged one above the other and are used for the connection of busbars or any other electrical connection, and whose axes are in each case aligned with one another in pairs, are integrally formed on each of two diametrically opposite envelope lines (31, 28) of the encapsulation enclosure (11), four flange stubs (32, 29; 33, 30) being provided in the region of the outlet side (which is located at the bottom) of each switch pole and two flange stubs (38, 20) being provided in the region of the upper end of each switch pole.

2. High-voltage switchgear assembly according to Claim 1, **characterized in that** the distance (D) between the centre axes of the flange stubs (38, 20; 32, 29; 33, 30) is the same in each case.

## Revendications

1. Installation de distribution électrique pour haute tension, comprenant un commutateur (14), à au moins un pôle, et une enveloppe de blindage (11) métallique qui entoure le commutateur et est remplie d'un gaz diélectrique et dont l'axe médian est parallèle à l'axe du commutateur, **caractérisée par le fait que** sur deux génératrices (31, 28) diamétralement opposées de l'enveloppe de blindage (11), sont formées d'une pièce respectivement trois manchettes à bride (38, 20; 32, 29; 33, 30), destinées à la connexion de barres omnibus ou de tout autre moyen de connexion électrique, qui sont disposées les unes au-dessus des autres et dont les axes sont alignés par paires, quatre manchettes à bride (32, 29; 33, 30) étant prévues dans la région du côté échappement situé en bas de chaque pôle de commutateur, et deux manchettes à bride (38, 20) étant prévues dans la région de l'extrémité supérieure de chaque pôle de commutateur.

2. Installation de distribution électrique pour haute tension selon la revendication 1, **caractérisée par le fait que** la distance (D) entre les axes médians des manchettes à bride (38, 20; 32, 29; 33, 30) est chaque fois la même.
